# EUROPEAN PATENT APPLICATION

(11) **EP 4 755 765 A1**
(43) Date of publication of application: **10.06.2026**
(21) Application number: 25215888.6
(22) Date of filing: 14.11.2025
(51) Int. Cl.: B62D 25/16, B62D 25/18

(54) **MUDGUARD GROUP PROVIDED WITH SPLASH GUARD WITH COUPLING/UNCOUPLING MEANS**

(30) Priority: 09.12.2024 IT 202400027927
(71) Applicant: DOMAR S.p.A., 70022 Altamura, Bari (IT)
(72) Inventor: DAMBROSIO, Massimo, 70022 Altamura, Bari (IT); REGINA, Giuseppe, 70022 Altamura, Bari (IT); LORUSSO, Marica, 70022 Altamura, Bari (IT)
(74) Representative: Mitola, Marco

(57) **Abstract**

Mudguard group (4) for industrial vehicles comprising: a mudguard (6) having an arc-of-a-circle shape and extending between a front end (8) and a rear end (12), with respect to a travel direction of an associable vehicle, a splash guard (16) associated with said rear end (12) of the mudguard (6), by means of coupling/uncoupling means (20), the splash guard (16) extending along a vertical direction Y-Y between an upper end (24), on the side of the rear end (12) of the mudguard (6), and a lower end (28), wherein the coupling/uncoupling means (20) comprise an upper plate (32) fixed to the mudguard (6) and a lower plate (36) fixed to the splash guard (16), mechanically associated with each other by means of at least one pair of horizontal pins (40, 44). Said at least one pair of horizontal pins (40, 44) comprises a first horizontal pin (40) and a second horizontal pin (44), said first and second pins being arranged along a horizontal direction X-X perpendicular to said vertical direction Y-Y and parallel to the extension axis of the upper (32) and lower (36) plates, offset from each other.

## Description

### FIELD OF APPLICATION

The present invention relates to a mudguard group provided with a splash guard with quick coupling/uncoupling means.

### PRIOR ART

There are in the prior art various solutions of mudguard groups provided with splash guards that are mounted on the wheels of industrial vehicles such as trucks, articulated lorries, trailers, vans, and the like.

The splash guards are lower appendages applied to the mudguards, as real extensions thereof, in order to prevent the projection of liquids and stones lifted by the wheel during the travel of the vehicle.

The splash guards are produced separately from the mudguards and are subsequently applied thereto.

The connections that join the splash guards to the mudguards must be robust since the splash guards are made of rubber, PP, PVC or also other harder compounds, and are thinner and more flexible than the structure of the mudguards.

Splash guards and mudguards are subjected to the action of atmospheric agents, as well as to the mechanical action of bodies impacting them (typically stones and mud).

Therefore, in order to ensure the resistance of the connections and the integrity of the splash guards over time, the known solutions must provide a decidedly solid coupling, typically by means of rivets.

It follows that the mounting of the splash guards to the mudguards is of a 'permanent' type, that is, the splash guards remain always in position until a possible replacement or maintenance.

The dismounting for replacement or maintenance therefore takes place in an irreversible manner, by shearing the rivets, and a subsequent reattachment implies the use of new intact rivets.

These solutions therefore require special tools for mounting, are uncomfortable and not very functional since there may be the need to remove/displace only temporarily the splash guard from the respective mudguard, for example, for manoeuvres of the vehicle, cleaning or maintenance.

There are then, in the known art, solutions of splash guards actually removable in a reversible manner, but these still require the use of special tools for the mounting, thus resulting uncomfortable to use.

There is therefore a felt need to overcome the drawbacks and limitations mentioned with reference to the prior art.

### DISCLOSURE OF THE INVENTION

A first object of the present invention is to provide a mudguard group whose splash guard is easy, quick and practical to install.

A further object of the present invention is to provide a mudguard group whose splash guard is not necessarily removed or displaced in an irreversible manner.

Finally, another object of the present invention is to provide a mudguard group that can be mounted and dismounted without the use of auxiliary means.

These objects are at least partially achieved by a mudguard group in accordance with claim 1.

### DESCRIPTION OF THE DRAWINGS

Further features and advantages of the present invention will become more apparent from the following description of preferred and non-limiting embodiments thereof, in which:
figure 1 shows a perspective view, in assembly configuration, of a mudguard group in accordance with one embodiment of the present invention;
figure 2 shows an enlarged perspective view of the coupling/uncoupling means of the mudguard group of figure 1;
Figure 3 shows a perspective view in exploded configuration of the mudguard group of figure 1;
Figure 4 shows an enlarged perspective view of the mudguard group of figure 1 in assembled configuration;
Figures 5-7 show perspective views, from different angles, of the mudguard group of figure 1, in the lifting configuration of the splash guard;

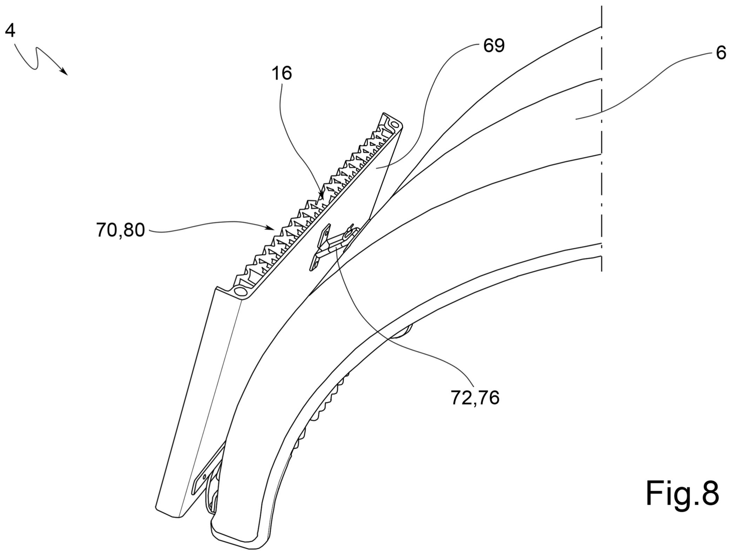

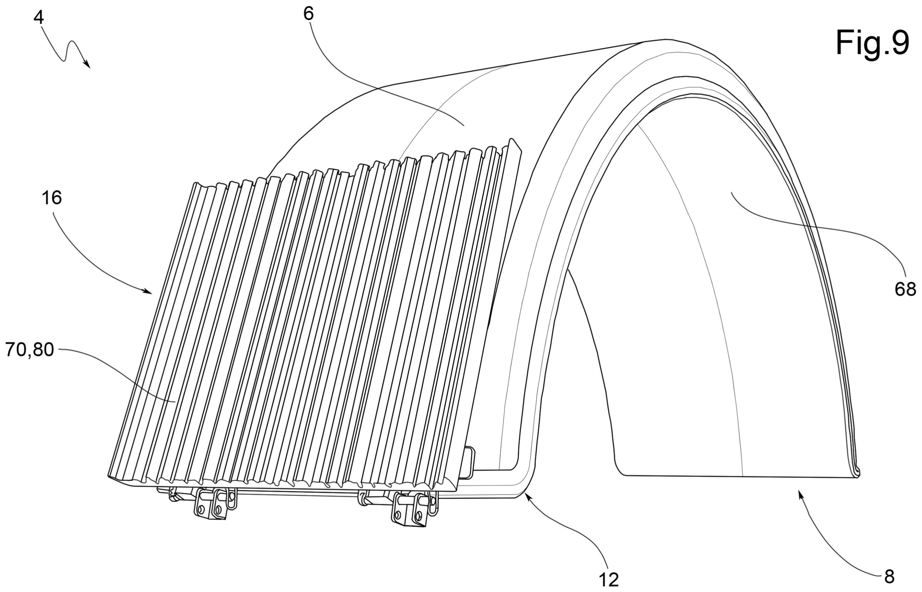

Figures 8-9 show perspective views, from different angles, of the mudguard group in the lifting configuration of the splash guard, in accordance with a further embodiment of the present invention.

The elements or parts of elements common between the embodiments described below will be indicated with the same reference numerals.

### DETAILED DESCRIPTION

With reference to the above figures, 4 globally denotes an overall view of a mudguard group for an industrial vehicle.

As mentioned, the term industrial vehicle must be understood in a broad sense, including, purely by way of example, trucks, articulated lorries, trailers, vans and the like.

The mudguard group 4 comprises a mudguard 6 having an arc-of-a-circle shape and extending between a front end 8 and a rear end 12, with respect to a travel direction of an associable vehicle. For the purposes of the present invention, the mudguard 6 may have any shape, size and may be made of any material, preferably plastic material.

The mudguard group 4 further comprises a splash guard 16 associated with said rear end 12 of the mudguard 6, by means of coupling/uncoupling means 20.

The splash guard 16 extends along a vertical direction Y-Y between an upper end 24, arranged on the side of the rear end 12 of the mudguard 6, and a lower end 28, free and facing the ground. In this manner, the splash guard 16 constitutes an appendage or extension of the mudguard 6 on the side of the rear end 12 thereof.

In accordance with one possible embodiment of the present invention, the splash guard 16, at said upper end 24, is curved and counter-shaped with respect to the rear end 12 of the mudguard 6.

The splash guard 16 may also have a straight configuration, so as to be substantially tangent to the rear end 12 of the mudguard 6.

The coupling/uncoupling means 20 comprise an upper plate 32 fixed to the mudguard 6 and a lower plate 36 fixed to the splash guard 16, mechanically associated with each other by means of at least one pair of horizontal pins 40, 44.

More specifically, the pair of horizontal pins 40, 44 is composed of a first horizontal pin 40 and a second horizontal pin 44.

The first and second pin, in addition, are arranged along a horizontal direction X-X, perpendicular to said vertical direction Y-Y and parallel to the upper plate 32 and lower plate 36.

In particular, the first and second pins are arranged offset from each other in any direction, preferably along said vertical direction Y-Y.

This offset arrangement of the pair of horizontal pins 40, 44 proves to be essential in order to rotationally block the splash guard 16 with respect to the mudguard 6 to which it is associated, as will be described in detail below.

The fixing of the upper plate 32 to the mudguard 6 and of the lower plate 36 to the splash guard 16 may be carried out by means of, for example, rivets 47 or similar fixing means.

In accordance with one possible embodiment, said upper plate 32 and said lower plate 36 are provided with mutually facing bases 48 and provided with holes 52 so as to rotatably house the at least one pair of horizontal pins 40, 44.

In accordance with one possible embodiment, the bases 48 of each upper plate 32 and lower plate 36 are arranged in opposing pairs.

Preferably, said bases 48 are connected to the respective upper and lower plates 32, 36 by means of vertical appendages 56.

In accordance with one possible embodiment, the vertical appendages 56 of the plates 32, 36 that support the pair of horizontal pins 40, 44 are offset along the horizontal direction X-X and at least partially interpenetrated with respect to the vertical direction Y-Y.

In accordance with one possible embodiment, said horizontal pins 40, 44 are parts of cotter pins provided with safety rings 46, preventing disengagement.

The cotter pins may be of various types and may comprise, for example, elastic portions and/or portions with snap-fitting engagement which ensure the fastening but also allow quick disassembly, when necessary.

Indeed, said safety rings 46 have a first end 46' connected to the head of one of the pins of the pair and a second end 46" connected to the head of the other pin of the pair.

In this way, when it is necessary to pull out one pin from its housing hole 52, there is no risk of losing the pin since it remains associated with the other pin still in position. In other words, the first horizontal pin 40 and the second horizontal pin 44 of the pair are always connected to each other.

Even more specifically, in order to allow such connection between the heads of the pair of horizontal pins 40, 44, the first horizontal pin 40 and the second horizontal pin 44 are arranged along their respective pin axis, X1 and X2 respectively, parallel to the horizontal direction X-X and according to a central symmetry.

In order to make the horizontal pins 40, 44 directly and easily accessible to a user if there is a need to disassemble the splash guard 16, the bases 48 are preferably arranged so as to project from the side of an extrados 60 of the mudguard 6, opposite to the associable wheel of the vehicle.

In accordance with one possible embodiment, the splash guard 16 is provided with a partition 64 projecting from the upper end 24 of the splash guard 16 itself towards the rear end 12 of the associable mudguard 6, so as to abut against an intrados 68 of the rear end 12, in a mounting configuration. With the aid of this abutment, the aligned, tangent or substantially vertical position of the splash guard 16 with respect to the mudguard 6 is ensured.

In accordance with one possible embodiment, the lower plate 36 and the upper plate 32 are equal to each other and are mounted in an overturned manner with respect to said horizontal direction X-X and said vertical direction Y-Y. In this way, the making and mounting of the plates 36, 32 are simplified, as well as their cost.

In accordance with one possible embodiment, the coupling/uncoupling means 20 comprise two pairs of side horizontal pins 40, 44, arranged on opposite sides with respect to the centreline plane M-M of the upper plate 32 and lower plate 36. This arrangement ensures greater stability in the fastening of the splash guard 16.

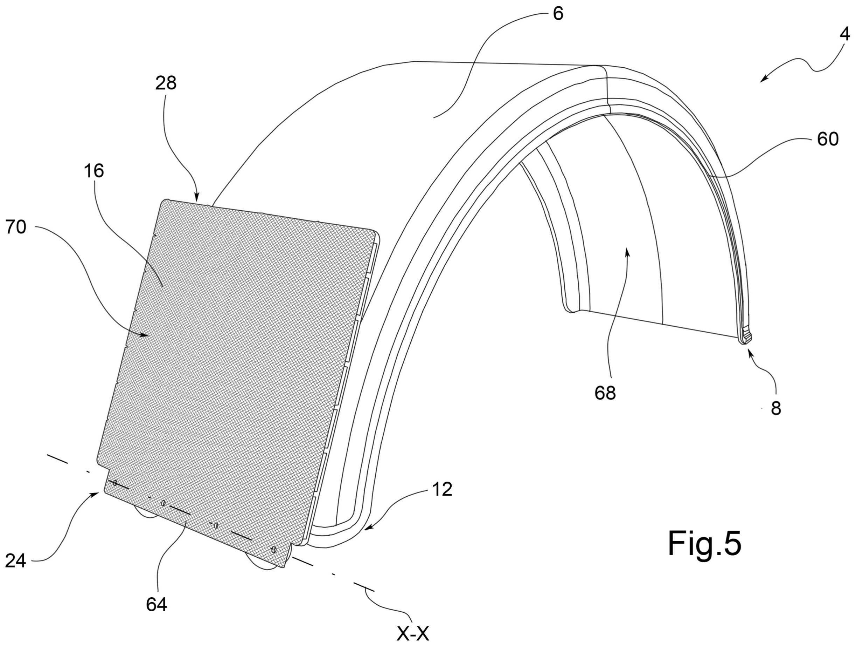

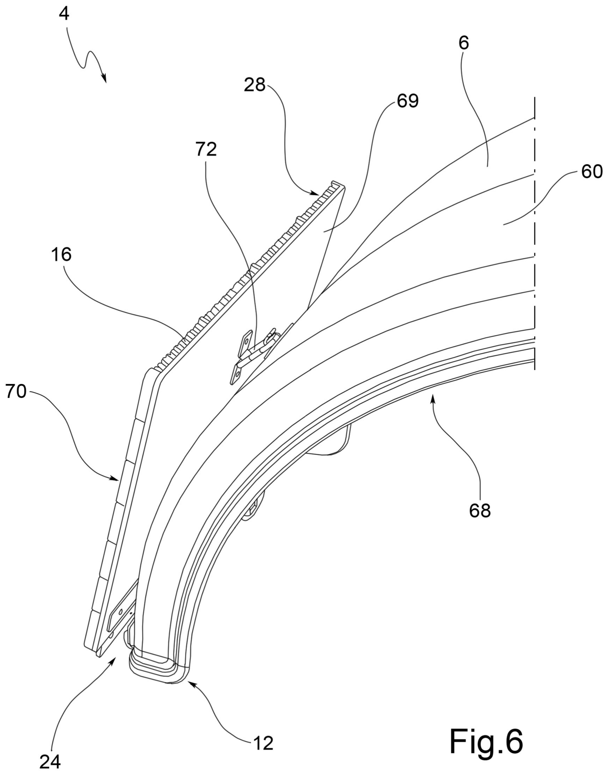

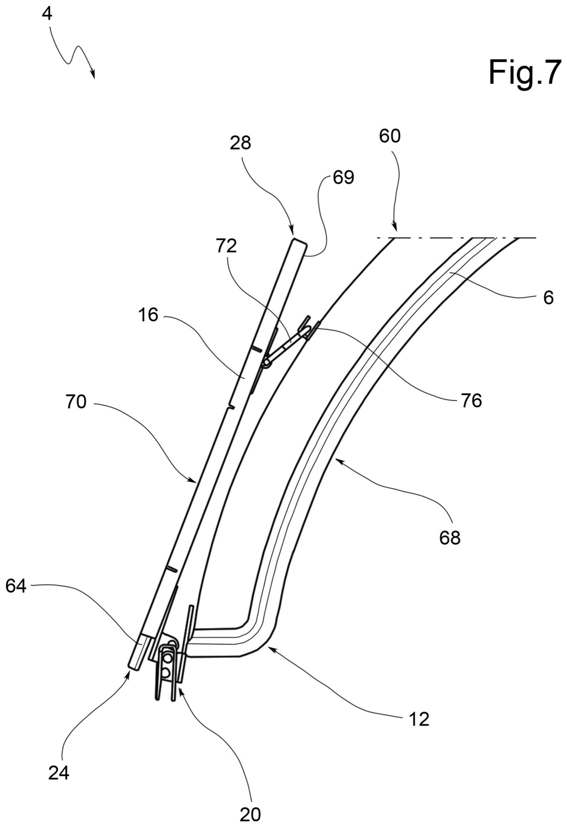

In accordance with one possible embodiment illustrated in figures 5-7, the splash guard 16, at an outer side 69 thereof, is provided with at least one hook 72 suitable for coupling with a corresponding appendage 76 positioned on the extrados 60 of the mudguard 6, after rotation of the splash guard 16 with respect to said first horizontal pin 40 or with respect to said second horizontal pin 44.

Indeed, in use, that is, when both pins of the pair are inserted in the respective housing holes 52, the splash guard 16 is rotationally blocked with respect to the mudguard 6 due to the fact that the first horizontal pin 40 is offset along the vertical axis Y-Y with respect to the second horizontal pin 44.

On the contrary, by extracting only one of the two pins from the hole, indistinctly, the rotational constraint no longer exists since only one pin remains inserted and is able to rotate around its own pin axis.

In particular, this function proves especially useful in case of maintenance.

Indeed, the user, after removing either of the two pins of the pair of horizontal pins 40, 44, can rotate the splash guard 16 upward, around a pin axis X1 or X2, flipping the splash guard towards the extrados 60 of the mudguard 6. At this point, the user, after coupling the hook 72 onto the appendage 76, can fasten the splash guard 16 in a lifted position without having to use hands or tools.

In accordance with one possible embodiment, the splash guard 16, at an inner side 70, facing the associable wheel and opposite to said outer side 69, is provided with a plurality of dirt retaining means 80, configured so as to retain the dirt lifted by the tyre of the vehicle.

For example, said dirt retaining means 80 comprise a 'V'-shaped profile, provided with ridges and grooves. It is also possible that said dirt retaining means 80 comprise pegs suitably spaced from one another.

Thanks to the coupling of the hook 72 on the appendage 76, it is possible to fasten the splash guard 16 in a lifted position with the inner side 70 facing upwards: in this way, the inner side 70 of the splash guard 16, which normally retains dirt, can be easily cleaned, for example by directing a jet of pressurised water directly onto it.

Moreover, the possibility of rotating and locking the splash guard in abutment against the mudguard proves very useful during reverse manoeuvres of the vehicle and in loading and unloading operations, involving the need to tilt the body, in which there is a risk of interference by the splash guard with the tyre.

The operation and disassembly of a mudguard group according to the present invention will now be described.

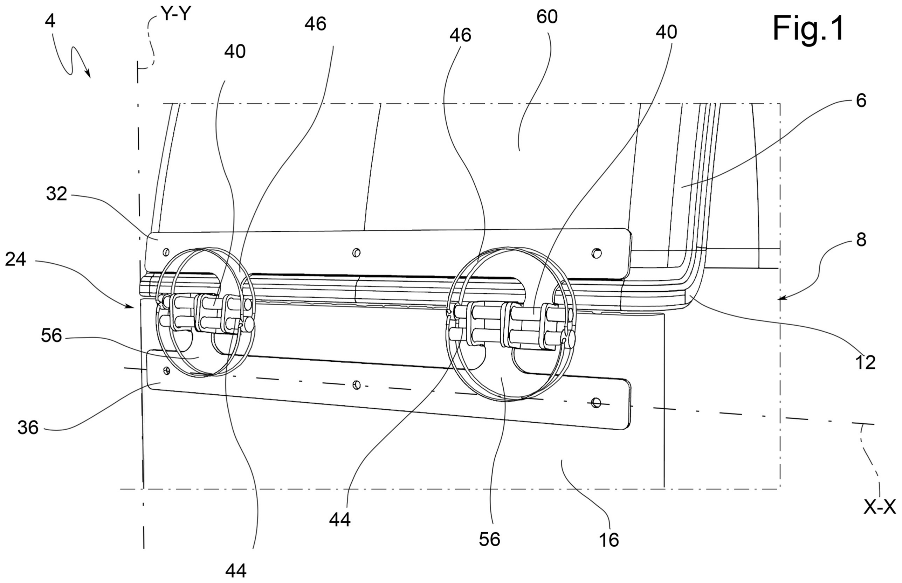

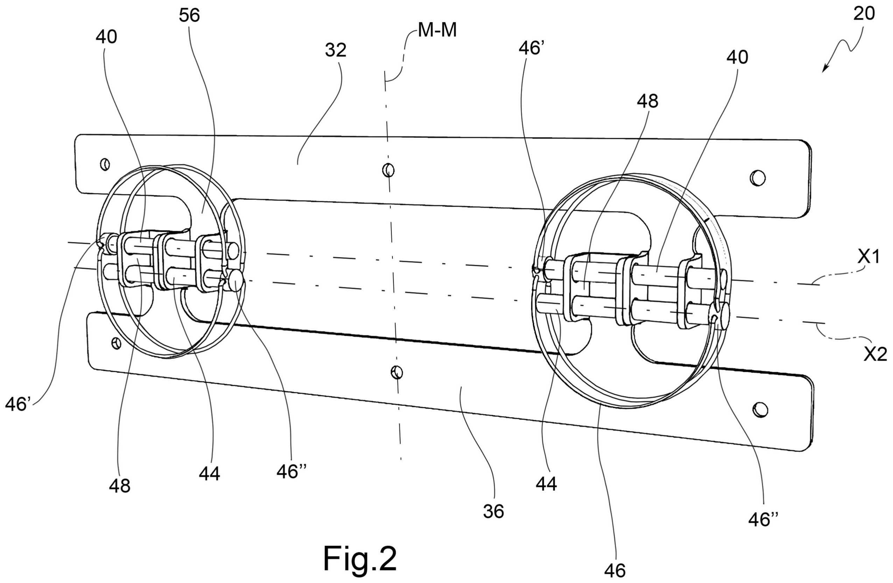

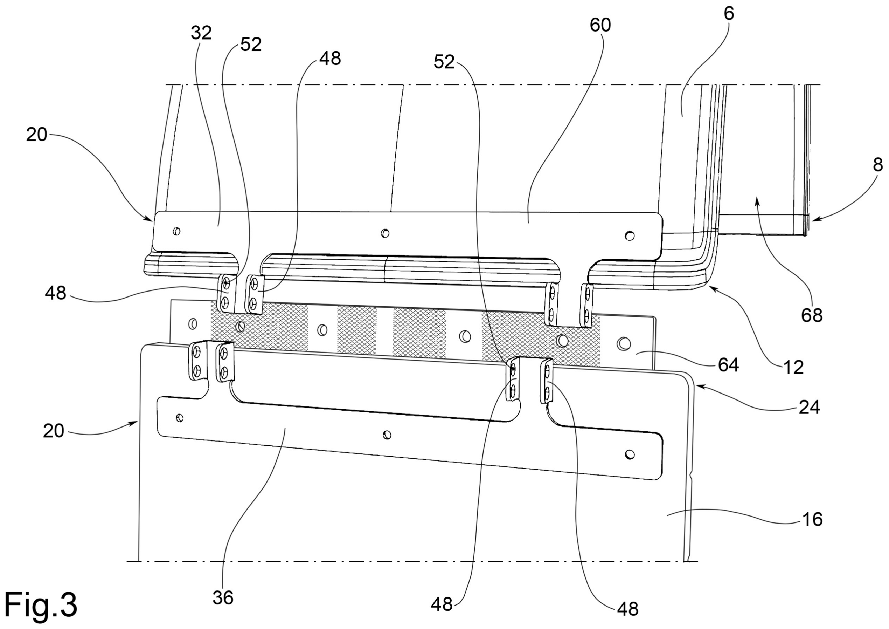

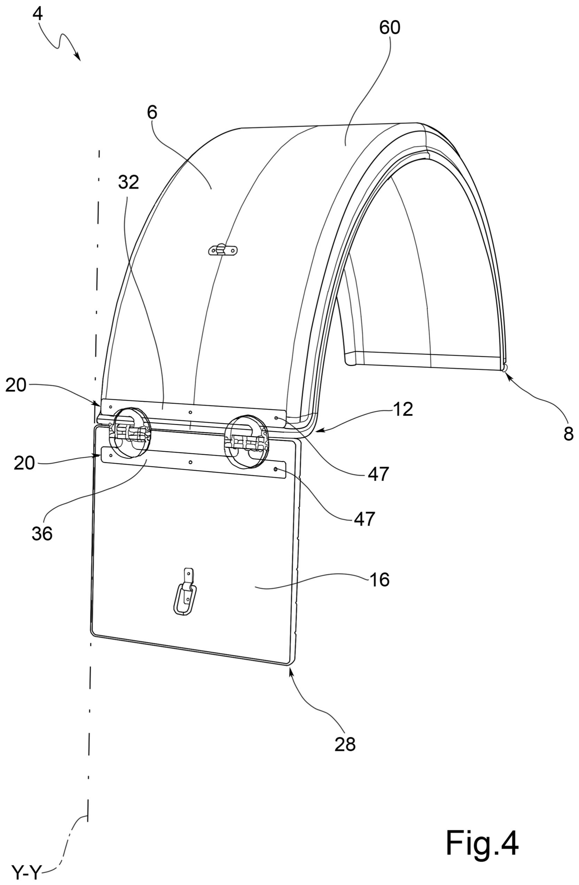

In particular, in the mounting configuration illustrated in figures 1-4, the splash guard 16 is in a substantially vertical position, so as to constitute an extension of the rear end 12 of the mudguard 6. In this configuration, the rotation of the splash guard 16 is prevented by the presence of both horizontal pins, first horizontal pin 40 and second horizontal pin 44, in the respective holes 52 and, if present, by the partition 64 abutting against the intrados 68 of the mudguard 6.

If necessary, the user may proceed to remove one of the two horizontal pins of the pair 40, 44, indifferently, so as to allow the partial overturning of the splash guard 16 around the horizontal direction X-X, until the splash guard 16 abuts against the extrados 60 of the mudguard 6. Preferably, the splash guard 16 can be locked in the lifted/overturned position by means of the hook 72 which is fastened to the appendage 76, as illustrated in figures 5-7.

Should the user need to remove the splash guard 16, then both the first horizontal pin 40 and the second horizontal pin 44 must be removed from the holes 52, so as to allow maintenance operations and/or the actual replacement of the splash guard 16.

As can be appreciated from the above, the present invention allows the drawbacks of the known art to be overcome.

In particular, the present invention allows the splash guard to be quickly coupled to/uncoupled from the mudguard, without the need for any tools.

This coupling and uncoupling operation can be repeated since it is entirely reversible: in fact, it does not require any breakage or replacement of the coupling/uncoupling means.

At the same time, the coupling/uncoupling means according to the invention are robust and reliable over time.

In particular, the coupling/uncoupling means are not compromised by impacts and vibrations, nor by the action of atmospheric agents, stones or mud and the like.

Thanks to the present invention, it is therefore possible to disassemble and reassemble the splash guards, even for replacement needs, quickly and without the use of tools.

Indeed, as seen, the external splash guard can be quickly disassembled from the mudguard for cleaning and/or replacement, simply by removing the locking cotter pins; practical operations which can also be carried out under unfavourable conditions.

Furthermore, thanks to the present invention, it is possible to rotate and lock the splash guard on the mudguard for specific needs and conditions, for example thanks to the addition of a hook applied to the mudguard and a ring with plate fixed to the lower part of the splash guard.

Moreover, the present invention provides the functionality of a hinge but also the rigidity and oscillation limitation in accordance with the homologation parameters of the splash guard, thanks to the presence of two vertically offset pins.

Furthermore, as seen, the present invention facilitates the maintenance and cleaning operations of the splash guard; the possibility of rotating and locking the splash guard in abutment on the mudguard proves very useful in reverse manoeuvres of the vehicle and in loading and unloading operations, involving the need to tilt the body, in which there is a risk of interference by the splash guard with the tyre.

Finally, the mounting system is unique, with no additional components.

A person skilled in the art, in order to meet contingent and specific requirements, may make numerous modifications and variations to the solutions described above.

The scope of protection of the invention is defined by the following claims.

### LIST OF REFERENCES

4: mudguard group
6: mudguard
8: front end
12: rear end
16: splash guard
20: coupling/uncoupling means
24: upper end
28: lower end
32: upper plate
36: lower plate
40: first horizontal pin
44: second horizontal pin
46: safety rings
46': first end
46": second end
48: bases
52: holes
56: vertical appendages
60: extrados
64: partition
68: intrados
70: inner side
72: hook
76: appendage
80: dirt retaining means
Y-Y: vertical direction
X-X: horizontal direction
X1: pin axis
X2: pin axis
M-M: centreline plane

## Claims

1. Mudguard group (4) for industrial vehicles comprising:
- a mudguard (6) having an arc-of-a-circle shape and extending between a front end (8) and a rear end (12), with respect to a travel direction of an associable vehicle,
- a splash guard (16) associated with said rear end (12) of the mudguard (6), by means of coupling/uncoupling means (20), the splash guard (16) extending along a vertical direction (Y-Y) between an upper end (24), on the side of the rear end (12) of the mudguard (6), and a lower end (28),
- wherein the coupling/uncoupling means (20) comprise an upper plate (32) fixed to the mudguard (6) and a lower plate (36) fixed to the splash guard (16), mechanically associated with each other by means of at least one pair of horizontal pins (40, 44),
- wherein said at least one pair of horizontal pins (40, 44) comprises a first horizontal pin (40) and a second horizontal pin (44), said first and second pins being arranged along a horizontal direction (X-X) perpendicular to said vertical direction (Y-Y) and parallel to the extension axis of the upper (32) and lower (36) plates, offset from each other along said vertical direction (Y-Y).

2. Mudguard group (4) for industrial vehicles according to claim 1, wherein said upper plate (32) and said lower plate (36) are provided with mutually facing bases (48) and provided with holes (52) so as to rotatably house the at least one pair of horizontal pins (40, 44).

3. Mudguard group (4) for industrial vehicles according to claim 2, wherein the bases (48) of each upper plate (32) and lower plate (36) are arranged in opposing pairs.

4. Mudguard group (4) for industrial vehicles according to claim 2 or 3, wherein said bases (48) are connected to the upper (32) and lower (36) plates by means of vertical appendages (56).

5. Mudguard group (4) for industrial vehicles according to claim 4, wherein the vertical appendages (56) of the upper (32) and lower (36) plates supporting the bases (48) that house the pair of horizontal pins (40, 44) are offset along the horizontal direction (X-X) and at least partially interpenetrated with respect to the vertical direction (Y-Y).

6. Mudguard group (4) for industrial vehicles according to any one of claims 2 to 5, wherein said bases (48) are arranged so as to project from the side of an extrados (60) of the mudguard (6).

7. Mudguard group (4) for industrial vehicles according to any one of claims 1 to 6, wherein the splash guard (16) is provided with a partition (64) projecting from the upper end (24) towards the rear end (12) of the associable mudguard (6), so as to abut against an intrados (68) of the rear end (12) of the mudguard (6), in a mounting configuration.

8. Mudguard group (4) for industrial vehicles according to any one of claims 1 to 7, wherein the lower plate (36) and the upper plate (32) are equal to each other and mounted in an overturned manner with respect to said horizontal direction (X-X) and said vertical direction (Y-Y).

9. Mudguard group (4) for industrial vehicles according to any one of claims 1 to 8, wherein said first and second horizontal pins (40, 44) are parts of cotter pins provided with safety rings (46).

10. Mudguard group (4) for industrial vehicles according to claim 9, wherein said safety rings (46) have a first end (46') connected to the head of one of the pins of the pair of horizontal pins (40, 44) and a second end (46") connected to the head of the other pin of the pair of horizontal pins (40, 44).

11. Mudguard group (4) for industrial vehicles according to any one of claims 1 to 10, wherein said first horizontal pin (40) and second horizontal pin (44) are arranged along their respective pin axis, (X1) and (X2), parallel to the horizontal direction (X-X) and according to a central symmetry.

12. Mudguard group (4) for industrial vehicles according to any one of claims 1 to 11, wherein the coupling/uncoupling means (20) comprise two pairs of side horizontal pins (40, 44), arranged on opposite sides with respect to a centreline plane (M-M) of the upper (32) and lower (36) plates.

13. Mudguard group (4) for industrial vehicles according to any one of claims 1 to 12, wherein the upper plate (32) is fixed to the mudguard (6) and the lower plate (36) is fixed to the splash guard (16) by means of rivets (47) .

14. Mudguard group (4) for industrial vehicles according to any one of claims 1 to 13, wherein the splash guard (16) is provided with at least one hook (72) suitable for coupling with a corresponding appendage (76) positioned on an extrados (60) of the mudguard (6), after rotation of the splash guard (16) with respect to said first horizontal pin (40) or with respect to said second horizontal pin (44).

15. Mudguard group (4) for industrial vehicles according to any one of claims 1 to 14, wherein the splash guard (16), at an inner side (70), facing an associable vehicle tyre, is provided with a plurality of dirt retaining means (80), configured so as to retain the dirt lifted by the tyre of the vehicle,
said dirt retaining means (80) comprising a 'V'-shaped profile, provided with ridges and grooves, and/or comprising pegs.
